# FASCICULE DE BREVET EUROPEEN

(11) **EP 3 726 980 B1**
(45) Date de publication et mention de la délivrance du brevet: **15.12.2021**
(21) Numéro de dépôt: 18829383.1
(22) Date de dépôt: 20.12.2018
(51) Int. Cl.: A01M 7/00, B05B 7/00

(54) **SYSTÈME ET PROCÉDÉ DE PULVÉRISATION DE PRODUIT, NOTAMMENT DE PRODUIT PHYTOSANITAIRE**
SYSTEM UND VERFAHREN ZUM VERSPRÜHEN EINES PRODUKTS, INSBESONDERE EINES PFLANZENSCHUTZPRODUKTS
SYSTEM AND METHOD FOR SPRAYING A PRODUCT, NOTABLY A PLANT-PROTECTION PRODUCT

(30) Priorité: 22.12.2017 FR 1763165
(43) Date de publication de la demande: 28.10.2020
(73) Titulaire: INSTITUT NATIONAL DE RECHERCHE POUR L'AGRICULTURE, L'ALIMENTATION ET L'ENVIRONNEMENT, 75007 Paris (FR)
(72) Inventeur: DE RUDNICKI, Vincent, 34070 Montpellier (FR); BONICEL, Jean-François, 34090 Montpellier (FR); CHERFAN, Raphaël, 34790 Grabels (FR)
(74) Mandataire: Regimbeau
(86) Numéro de dépôt international: PCT/EP2018/086355
(87) Numéro de publication internationale: WO 2019/122221

(56) Documents cités:
- EP-A1- 2 420 138
- EP-B1- 2 420 138
- AU-A1- 2009 202 946
- FR-A- 1 287 453
- FR-A1- 2 407 025
- FR-A1- 2 905 559
- US-A1- 2016 262 371

## Description

La présente invention concerne le domaine des systèmes de pulvérisation de produits de traitement, notamment de pulvérisation de produits phytosanitaires sur des plantes.

### DOMAINE TECHNIQUE GENERAL

Les normes et les contraintes écologiques actuelles imposent de contrôler les épandages de produits phytosanitaires.

### ETAT DE L'ART

De nombreux systèmes ont déjà été proposés pour opérer la pulvérisation de produits phytosanitaires.

On distingue généralement trois types de systèmes de pulvérisation.

Un premier type de système de pulvérisation utilise des jets projetés. Ces appareils comprennent des buses qui assurent une fragmentation des jets pulvérisés en gouttelettes. Les jets pulvérisés sont dirigés vers la végétation à traiter. Les gouttelettes de produit atteignent leur cible de végétaux grâce à leur vitesse propre.

Un deuxième type de système de pulvérisation, appelé jet porté, comprend des moyens de ventilation générant un flux d'air à fort volume combinés avec des buses de pulvérisation. Dans ce cas les buses assurent une fragmentation des jets pulvérisés en gouttelettes, mais le flux d'air assure le transport des gouttelettes vers les végétaux à traiter.

Un troisième type de système de pulvérisation, appelé pneumatique, fonctionne sans buses et comprend des moyens de ventilation adaptés pour générer un flux d'air à très forte vitesse et sous pression. Des gouttelettes sont générées lorsque le produit phytosanitaire est mis en contact avec le flux d'air, les gouttelettes étant générées par fragmentation par le choc du liquide de traitement dans le courant d'air à haute vitesse. Le flux d'air participe également dans ce cas au transport et à la pénétration des gouttelettes au sein de la végétation.

Le document EP 0 653 157 a proposé en 1993 un système comprenant des diffuseurs de jets d'air sous pression associés à des gicleurs pour un produit de traitement liquide adaptés pour assurer une répartition homogène du produit de traitement dans le courant d'air obtenu par l'ensemble des diffuseurs.

Le document EP 1 468 604 a proposé en 2003 des rampes de pulvérisation qui comprennent des buses de pulvérisation de produit associées à des séries de trous entourant chaque buse, alimentés par un générateur sous pression et destinés à générer des flux d'air ayant pour objectif de limiter l'impact d'un vent transversal sur les jets de produits pulvérisés issus des buses. Le concept proposé par ce document, qui génère des jets d'air turbulents, n'a cependant pas donné totalement satisfaction et a été remplacé par des moyens décrits dans les documents postérieurs.

Le document EP 2 420 138 a proposé en 2010 un système de pulvérisation inspiré de celui décrit dans le document EP 0 653 157, comprenant un ensemble complexe de buses ou gicleurs de pulvérisation de produit et de buses de génération de flux d'air sous pression comportant des sorties multiples centrales et latérales de flux d'air agencées de sorte que le flux de liquide phytosanitaire se mélange avec des flux d'air induits entrainés par les flux d'air issus desdites sorties. Le système décrit dans ce document ne donne également pas totalement satisfaction. Sa structure en particulier est complexe.

Face aux difficultés rencontrées avec les systèmes décrits dans les documents précités, le document FR 2 969 902 a proposé fin 2010 un pulvérisateur à tunnel pour rangs de plantes qui voulait marquer une rupture avec les techniques antérieurement proposées et comprenant à cette fin des panneaux récupérateurs destinés à récupérer une part du produit pulvérisé qui n'atteint pas la végétation à traiter et comportent à cette fin des moyens d'aspiration adaptés pour récupérer la part de produit pulvérisé qui n'est pas fixée sur cette végétation. Ce système ne donne cependant pas non plus totalement satisfaction. Il est en particulier encombrant.

D'autres dispositifs connus sont divulgués notamment dans les documents FR 1 499 433, EP 2 441 523, FR 2 641 479, US 2016 262371 et AU 2009 202946.

### PROBLEME TECHNIQUE

L'objectif de la présente invention est de proposer de nouveaux moyens permettant de perfectionner l'état de la technique.

La présente invention a en particulier pour objectif de proposer des moyens de conception simples et fiables, qui permettent d'améliorer le contrôle des épandages de produits phytosanitaires et de les circonscrire à la cible végétale.

### BASE DE L'INVENTION

Les buts précités sont atteints selon la présente invention grâce à un système selon la revendication 1.

De préférence les moyens générateurs du flux d'air sont conformés de sorte que le flux d'air enfermant les jets issus des buses de pulvérisation n'interfère pas avec la propulsion de ce produit en sortie desdites buses.

Selon d'autres caractéristiques avantageuses de l'invention :
. Les moyens de génération de flux d'air sont modulaires pour adapter la géométrie du rideau de confinement généré.
. La fente de sortie des moyens de génération de flux d'air est délimitée par des lèvres dissymétriques, mettant en œuvre un effet Coanda et permettant d'agir sur l'inflexion entrante ou sortante du flux d'air et donc sur la géométrie du rideau d'air.
. La fente de sortie des moyens de génération de flux d'air est délimitée par des lèvres faisant un angle entre leurs faces interne et externe de l'ordre de 15°.
. L'épaisseur de la fente de sortie des moyens de génération de flux d'air est comprise entre 1 et 6 mm, avantageusement entre 1 et 4 mm ;
. L'épaisseur de la fente de sortie des moyens de génération de flux d'air est réglable et ajustable.
. la section droite des moyens de génération de flux d'air débouchant sur la fente de sortie est en forme de goutte d'eau.
. la vitesse du flux d'air est déterminée pour créer un flux laminaire en sortie de la fente, qui se transforme en un flux turbulent sur la cible de végétaux.
. les buses sont réglables en position, au moins en hauteur et de préférence selon trois axes x, y et z, et en orientation.

La présente invention concerne de plus un engin porteur comprenant au moins un système du type précité.

L'engin comporte de préférence au moins deux systèmes du type précité en vis-à-vis formant enjambeur et permettant de traiter simultanément deux côtés opposés d'une cible végétale.

La présente invention concerne également un procédé selon la revendication 18.

### DESCRIPTIF RAPIDE DES FIGURES

D'autres caractéristiques, buts et avantages de l'invention, apparaîtront à la lecture de la description détaillée qui va suivre, et en regard des dessins annexés, donnés à titre d'exemples non limitatifs et sur lesquels :
- la figure 1 représente une vue schématique en coupe horizontale d'un système conforme à un premier mode de réalisation de la présente invention,
- la figure 2 représente une vue de face verticale de ce système,
- la figure 3 représente une vue schématique en coupe horizontale d'un système conforme à un deuxième mode de réalisation préférentiel de la présente invention,
- la figure 4 représente une section d'un conduit du système conforme à la présente invention,
- la figure 5 représente une section d'un conduit du système conforme à une variante de la présente invention dans laquelle il est prévu des moyens de réglage et d'ajustage de l'épaisseur de la fente de sortie des moyens de génération de flux d'air,
- la figure 6 représente un exemple de réalisation d'un segment rectiligne du conduit conforme à la présente invention,
- la figure 7 représente un exemple de réalisation d'un segment incurvé du conduit conforme à la présente invention,
- la figure 8 représente un système conforme à la présente invention de type modulaire, formé par assemblage de différents segments,
- la figure 9 illustre schématiquement un flux conforme à l'invention, laminaire en sortie de la fente de sortie des moyens de génération de flux d'air et qui se transforme en flux turbulent au niveau de la végétation à traiter,
- la figure 10 illustre schématiquement une vue en perspective d'une variante de réalisation d'un engin de pulvérisation conforme à la présente invention comprenant plus de deux systèmes en vis-à-vis formant enjambeur, en l'espèce deux paires de tels systèmes en vis-à-vis, pour traiter simultanément deux côtés opposés de deux rangs d'une cible végétale,
- la figure 11 représente schématiquement un volet orientable de clapet susceptible d'être intégré dans un tronçon de conduit pour contrôler le débit de flux d'air, voire la répartition de ce flux entre différents segments du conduit,
- la figure 12 représente une vue de face avant d'un système conforme à la présente invention,
- la figure 13 représente une vue en perspective de ce même système, et
- les figures 14 et 15 représentent deux vues en perspectives d'un segment de conduit conforme à la présente invention.

### DESCRIPTIF DETAILLE DE L'INVENTION

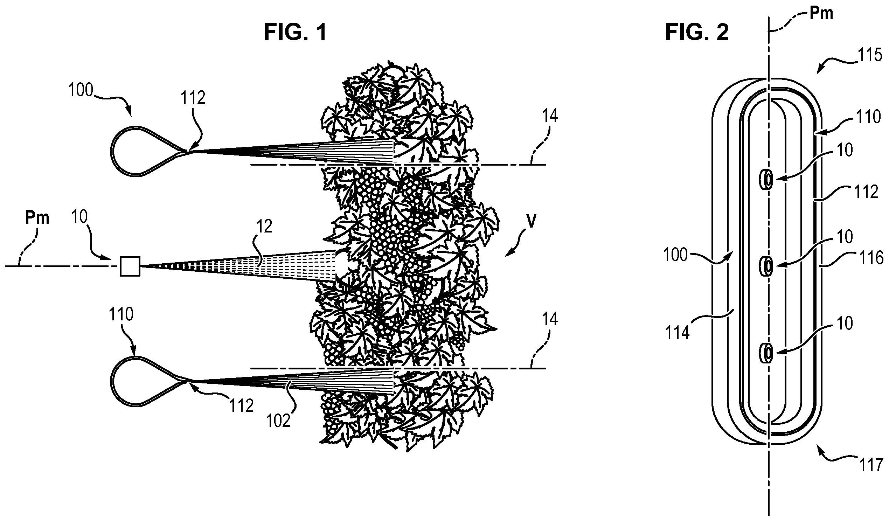

L'invention propose un système comprenant comme illustré sur les figures 1 à 3 annexées, des buses 10 de pulvérisation de produit, par exemple de produit phytosanitaire, et des moyens 100 générateurs de flux d'air comprenant un conduit 110 qui possède une sortie 112 en forme de fente adaptée pour générer un flux d'air sous forme d'une lame d'air continue 102 produite latéralement à côté des jets 12 issus des buses de pulvérisation 10.

La lame d'air continue 102 constitue un rideau de confinement des jets 12 du produit pulvérisé assimilable à un bouclier formé d'une lame d'air continue, infranchissable par le produit pulvérisé, sans interférer de préférence avec la propulsion de ce produit en sortie desdites buses 10.

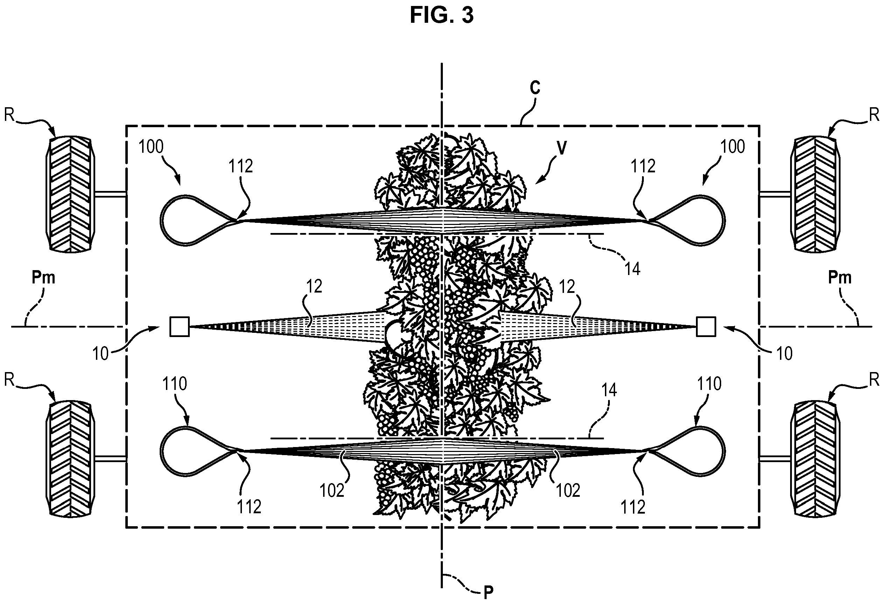

Ce barrage est symbolisé sur les figures 1 et 3 par les lignes interrompues référencées 14.

Comme illustré sur les figures annexées, selon l'invention, le conduit 110 définit une sortie 112 en forme de fente annulaire adaptée pour générer un flux d'air sous forme d'une lame d'air tubulaire continue 102 enfermant les jets 12 issus des buses de pulvérisation 10.

Un tel rideau tubulaire d'air 102 permet d'optimiser le confinement des produits phytosanitaires sur la cible de végétal à traiter référencée V sur les figures 1 et 3.

Le système précité et notamment le conduit 110 sont de préférence placés sur un engin porteur automoteur, tel qu'un véhicule de type chenillard ou robot, notamment pour le traitement viticole.

De tels engins sont connus en soi et ne seront donc pas décrits dans le détail par la suite.

Plus précisément encore l'engin comporte de préférence au moins deux systèmes du type précité en vis-à-vis formant enjambeur et permettant de traiter simultanément deux côtés opposés d'une cible végétale, comme illustré sur la figure 3. Dans ce cas les flux d'air tubulaires 102, ainsi que les jets d'air 12, sont dirigés respectivement l'un vers l'autre, en direction du plan moyen vertical et longitudinal P de l'engin.

Sur la figure 3 on a schématisé l'engin porteur par son contour C. Un tel engin peut être porté par des roues ou des chenilles porteuses R également schématisées sur la figure 3.

Selon l'invention le conduit 110 est formé d'un anneau oblong en forme générale d'hippodrome comprenant deux tronçons rectilignes parallèles 114, 116 reliés par des extrémités de liaison 115, 117 globalement incurvées.

De préférence le conduit 110 est formé par assemblage d'une pluralité de segments rectilignes 140 et de segments incurvés 150. Le conduit 110 est ainsi modulaire. Sa géométrie peut aisément être adaptée aux dimensions de la cible végétale à traiter.

L'invention est limitée à une géométrie de conduit 110 oblong en hyppodrome. Néanmoins les alternatives suivantes de l'invention sont hors de l'étendu de protection des revendications mais techniquement envisageables : tous types de géométrie d'anneau, par exemple et non limitativement des géométries en ellipse, en cercle, voire en carrée dont les angles seront plus ou moins arrondis selon l'application souhaitée et l'optimisation aérodynamique du système.

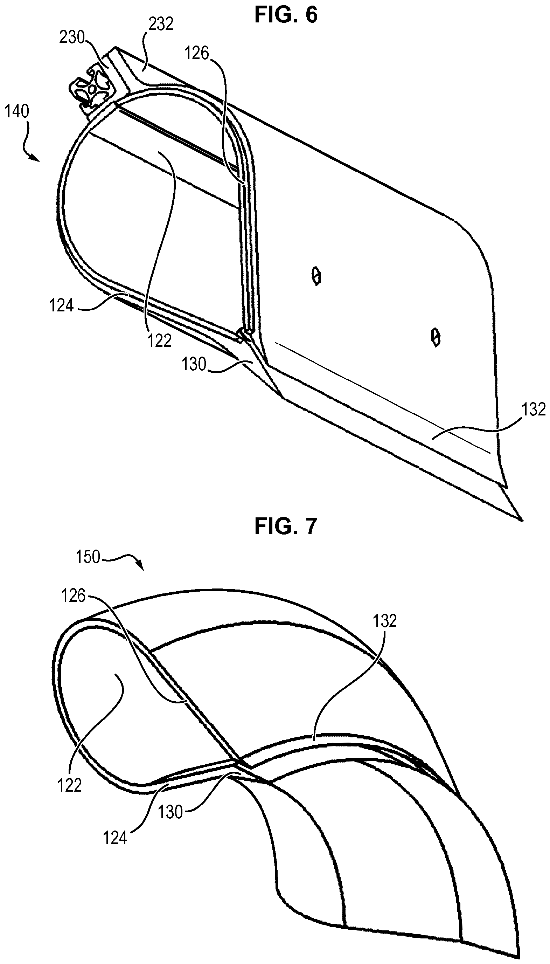

La figure 6 représente un exemple de segment 140 rectiligne.

La figure 7 représente un exemple de segment 150 incurvé.

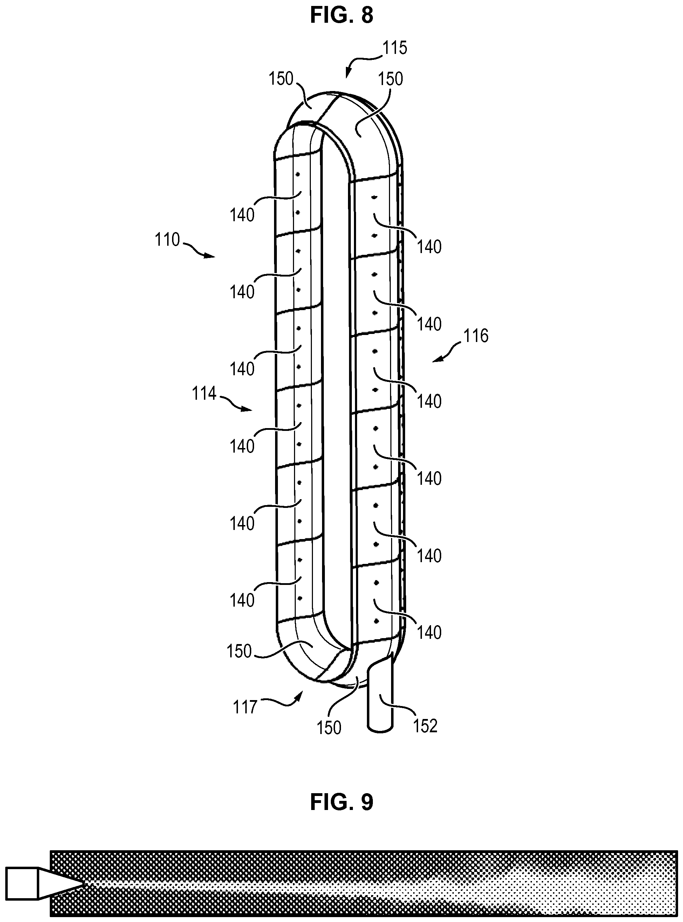

Selon la figure 8 le conduit 110 est ainsi formé par assemblage de 6 segments rectilignes 140 constituant chacun des tronçons rectilignes 114 et 116 et de 2 segments incurvés 150 constituant chacune des extrémités de liaison 115 et 117, soit un total de 16 segments 140 et 150.

L'utilisation de segments incurvés 150, et non pas anguleux, permet de garantir un rideau annulaire continu du flux d'air 102, en assurant la continuité du film d'air.

A titre d'exemple non limitatif chacun des segments rectilignes 140 peut avoir une longueur de l'ordre de 25cm.

Bien entendu l'invention n'est pas limitée au mode de réalisation particulier représenté sur la figure 8. Ainsi chaque tronçon rectiligne 114 et 116 peut être formé d'un nombre de segments rectilignes 140 différent de 6 et chacune des extrémités de liaison 115 et 117 peut comprendre un segment rectiligne 140 au moins intercalé entre les deux tronçons incurvés 150.

L'entrée d'air provenant du générateur, dans le conduit 110, peut faire l'objet de nombreuses variantes de réalisation.

De préférence comme on le voit sur la figure 8, l'entrée d'air provenant du générateur, dans le conduit 110, est opérée au niveau d'un segment incurvé 150, ou d'au moins un segment incurvé 150, au niveau d'un embout 152. Plus précisément encore ledit embout 152 est un embout cylindrique de liaison dont l'axe central est parallèle à la direction longitudinale des segments rectilignes 140 en regard à l'assemblage et très avantageusement coaxial du centre de ces segments rectilignes 140 en regard.

Sur la figure 8 une seule entrée d'air possible dans le conduit 110 est représentée sous forme de l'embout 152.

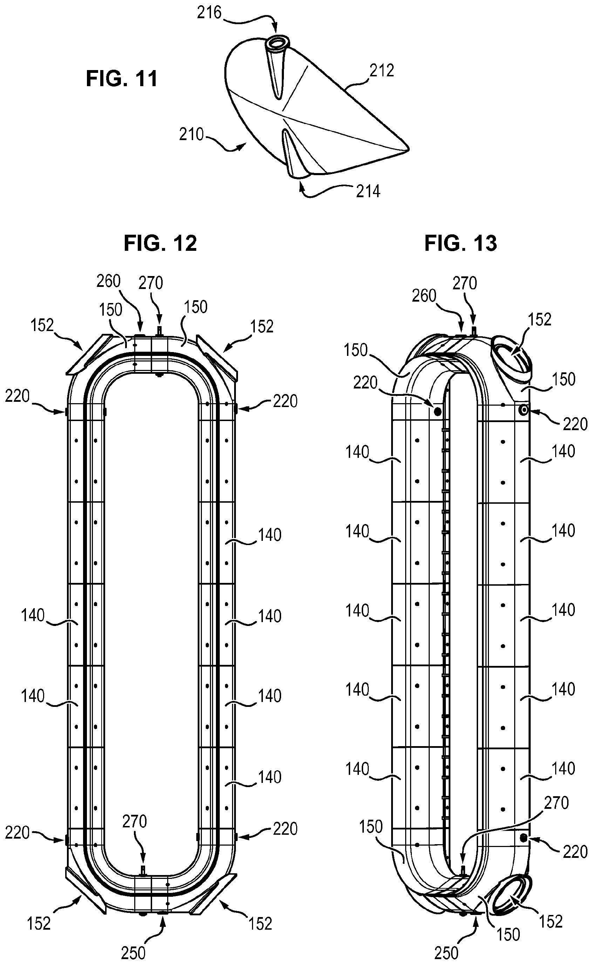

Sur les figures 12 et 13 on a représenté une variante de réalisation selon laquelle il est prévu plusieurs entrées possibles destinées à être raccordées à des sources respectives.

Plus précisément selon la représentation donnée sur les figures 12 et 13, il est prévu une entrée possible d'air au niveau de chacun des quatre segments incurvés 150, soit quatre entrées d'air possibles.

Sur les figures 12 et 13, ces quatre entrées sont référencées 152.

Lorsque l'utilisateur dispose d'un tel système à quatre entrées possibles pour un même conduit, il peut sélectivement soit relier chacune de ces quatre entrées 152 à une source de flux d'air sous pression, tel qu'un ventilateur associé à une motorisation, soit relier seulement certaines de ces entrées 152, par exemple une seule entrée, à une source de flux d'air sous pression, en obturant les autres entrées non reliées à une source de flux d'air sous pression par un couvercle complémentaire.

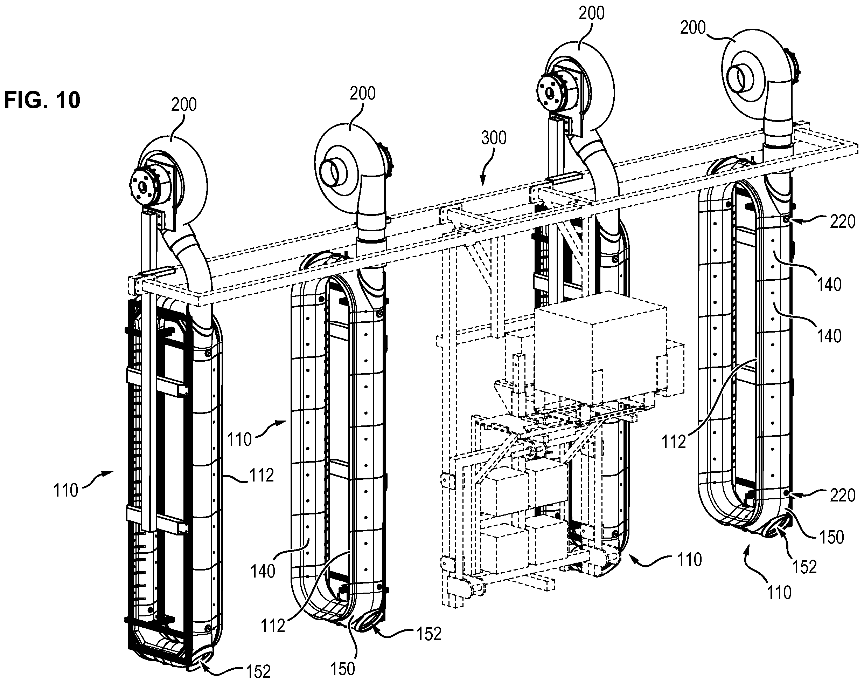

Sur la figure 10 on a représenté une implantation d'un seul ventilateur associé à sa motorisation, référencé 200, pour chaque système ou conduit 110.

Le mode de réalisation représenté en variante sur les figures 12 et 13 permet ainsi de disposer d'une grande latitude de configurations quant à l'implantation des sources de flux d'air, c'est-à-dire des ventilateurs.

L'utilisation de multiples sources raccordées à un conduit 110, par exemple quatre sources raccordées à un même conduit, permet par ailleurs d'utiliser des ventilateurs et moteurs associés de taille et de puissance réduites par rapport à un mode de réalisation à ventilateur et moteur unique.

On notera par ailleurs en observant la figure 10 que de préférence les ventilateurs d'alimentation en flux d'air 200 sont implantés en partie supérieure du châssis support, soit au-dessus de celui-ci.

Le châssis support des différents systèmes de pulvérisation comprenant chacun un conduit 110 peut faire l'objet de nombreux modes de réalisation. Selon le mode de réalisation particulier représenté sur la figure 10, ce châssis support est formé d'une poutre horizontale 300 disposée en partie supérieure de l'installation, à une hauteur supérieure à la hauteur maximale de la végétation à traiter de sorte que l'engin puisse être déplacé sur la végétation sans que la poutre 300 n'interfère avec la végétation. Les différents conduits 110 sont suspendus sur cette poutre 300 selon un pas qui correspond à l'écartement entre les différents rangs de végétation à traiter.

Le cas échéant la structure support des ventilateurs 200 sur le châssis support peut être articulée pour permettre une inclinaison contrôlée de ces ventilateurs 200 vers l'intérieur des rangs de culture traités entre deux systèmes 100 en vis-à-vis.

Les ventilateurs 200 sont placés et orientés au plus près de la végétation à traiter pour permettre de limiter au maximum l'influence du déplacement de l'engin.

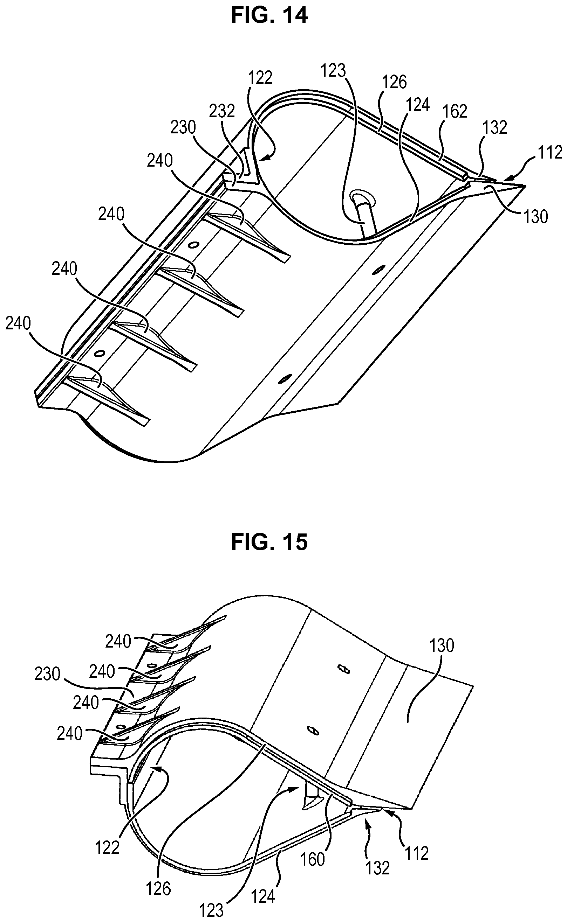

Il est prévu de préférence des moyens d'étanchéité entre chaque paire de segments adjacents 140, 150. On aperçoit notamment à cette fin sur la figure 6 et sur la figure 15 une nervure 160 sur le chant d'un segment, destinée à pénétrer dans une gorge ou rainure complémentaire 162 formée sur le segment en regard et visible par exemple sur la figure 14.

La nervure 160 et la gorge complémentaire 162 forment un ensemble male/femelle ou labyrinthe qui assure l'étanchéité entre deux segments adjacents 140, 150, qu'il s'agisse de deux segments rectilignes 140 adjacents, de deux segments incurvés 150 adjacents ou encore d'un segment rectiligne 140 et d'un segment incurvé 150 adjacents.

La section droite de chaque segment 140 et 150 est en forme de goutte d'eau fermée possédant cependant une ouverture correspondant à la fente 112.

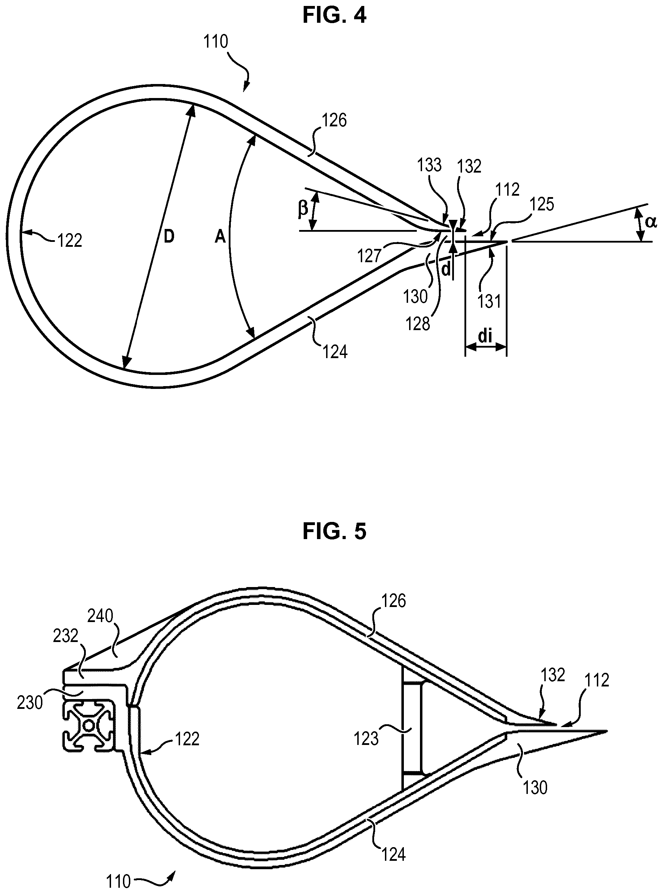

Comme on le voit sur la figure 4, chaque segment 140 et 150 est délimité intérieurement par une calotte 122 circulaire de révolution couvrant une ouverture angulaire légèrement supérieure à 180°, prolongée par deux facettes globalement planes 124, 126, qui convergent en éloignement de la calotte 122, selon un angle A typiquement de l'ordre de 60°.

Le diamètre D de la calotte 122 est typiquement de l'ordre de 66mm.

Au niveau de leurs extrémités libres, opposées à la calotte 122, les facettes 124 et 126 définissent entre elles un canal 128 qui correspond à la fente 112 précitée.

Plus précisément à ce niveau les deux facettes 124 et 126 sont délimitées par des surfaces planes et parallèles 125 et 127.

La distance d entre ces surfaces 125 et 127, qui correspond à l'épaisseur de la fente 112 et par conséquent à l'épaisseur du rideau d'air en sortie du système est de préférence comprise entre 1 et 6 mm, avantageusement entre 1 et 4 mm.

Plus précisément encore de préférence la distance d entre les deux surfaces 125 et 127 est réglable et ajustable pour permettre de contrôler la vitesse du flux d'air en sortie de la fente 112 et ainsi la portée en flux laminaire du rideau d'air généré.

Les moyens de réglage peuvent faire l'objet de nombreux modes de réalisation et ne seront pas décrits dans le détail par la suite. Comme illustré sur la figure 5, ils peuvent être formés par exemple de moyens filetés 123 liés respectivement aux deux facettes 124 et 126 et permettant de régler élastiquement la distance entre celles-ci au niveau du canal de sortie 128.

Les moyens de réglage 123 doivent être ponctuels pour ne pas perturber le flux d'air.

Plus précisément encore selon une variante de réalisation de l'invention, les deux facettes 124, 126 comprennent chacune, au niveau de leur extrémité libre, une lèvre 130, 132.

Les lèvres 130 et 132 sont délimitées intérieurement par les surfaces précitées 125 et 127, planes et parallèles.

Les inventeurs ont déterminé que de telles surfaces planes 125, 127 sont optimales pour assurer la compression linéaire de l'air jusqu'à la sortie des lèvres 130, 132.

Le lèvres 130 et 132 sont par ailleurs délimitées extérieurement par des surfaces 131, 133 respectives globalement planes.

Les surfaces 131 et 133 convergent en éloignement de la calotte 122.

Dans le cadre de l'invention, les surfaces 131 et 133 sont de préférence inclinées du même angle par rapport respectivement aux surfaces internes 125, 127. Dans le cadre de l'invention, les surfaces 131 et 133 sont ainsi de préférence inclinées selon un angle référencé α et β de l'ordre de 15° par rapport aux surfaces internes 125, 127. Les inventeurs ont déterminé que cet angle était optimal pour assurer l'effet Coanda recherché.

L'effet Coanda est bien connu en soit de l'homme de l'art. Il ne sera donc pas décrit dans le détail par la suite.

On rappelle qu'un effet Coanda est un effet d'attraction ou d'attachement d'un jet de fluide par une surface sur laquelle il s'écoule de sorte que le fluide suit la surface et subit une déviation avant de s'en détacher. Cet effet permet un rapport d'amplification important entre la quantité d'air provenant des moyens générateurs et fournie par la fente 112 et le volume d'air entrainé à partir de l'environnement pour former les flux d'air continus 102.

Les inventeurs considèrent qu'un tel angle de l'ordre de 15° est optimal pour l'accélération de l'air aspirée sur l'extérieur de lèvres 130, 132.

Par ailleurs comme on le voit sur les figures annexées, selon l'invention, les lèvres 130 et 132 sont de préférence dissymétriques, plus précisément encore de longueur différente. En l'espèce la lèvre 130 est plus longue que la lèvre 132. La lèvre 130 dépasse de la lèvre 132 par exemple d'une distance di de l'ordre de 10mm.

Cette dissymétrie permet un meilleur contrôle de laminarité du flux généré, de renforcer le coefficient d'amplification du volume d'air entrainé et de contrôler l'angle de sortie du flux d'air.

Le nombre de buses 10 placées au centre du conduit 110 pour pulvériser le produit sur la cible végétale V dépend de la géométrie et des dimensions du conduit 110. A titre d'exemple non limitatif, on peut prévoir par exemple 3 ou 4 buses 10, qui selon l'invention de façon limitative sont réparties linéairement et de manière équidistante dans le plan moyen longitudinal Pm du conduit 110.

Les buses 10 sont de préférence réglables au moins en hauteur, de préférence latéralement et en profondeur, soit selon trois axes x, y et z dans un repère orthonormé et en orientation, sur le châssis de l'engin C. Leur ouverture angulaire de diffusion est également de préférence réglable. Ces réglages sont adaptés notamment pour limiter les potentiels résidus de produit pendant le traitement.

Le conduit 110 est alimenté en flux d'air sous pression par tous moyens appropriés permettant de générer un débit d'air sous une pression adaptée pour produire un effet laminaire en sortie de la fente 112.

Plus précisément encore selon une réalisation particulière de l'invention le débit d'air, notamment la vitesse du flux d'air en sortie de la fente 112, est adapté pour générer, comme illustré sur la figure 9, un flux laminaire en sortie de la fente 112, mais un flux turbulent à une distance qui correspond à la distance des végétaux, typiquement à une distance de l'ordre de 30cm.

Cette disposition permet de secouer les végétaux, notamment leurs feuilles et d'optimiser une application homogène de produit phytosanitaire provenant des buses 10.

La vitesse du flux d'air en sortie du canal 128 est typiquement comprise entre 20m/s et 100m/s.

Par ailleurs de préférence les moyens générateurs de débit d'air sont adaptés pour fournir un débit compris entre 400 et 1500m³/h créant une pression résultante suffisante dans le cône terminal du profil en goutte 110, défini par les facettes 124 et 126 pour accélérer la vitesse de sortie d'air.

Les moyens générateurs du flux d'air peuvent être formés par tous moyens appropriés connus de l'homme de l'art, par exemple d'un compresseur d'air à vis ou à palette ou encore d'un ventilateur à turbine.

Le cas échéant le conduit 110 peut comporter en son sein un ou plusieurs clapets réglables adaptés pour obturer une partie réglable de la section du conduit 110 pour contrôler le débit d'air dans les différents segments du conduit, et la répartition du flux d'air entre différentes parties du conduit.

On a représenté schématiquement sur la figure 11 un exemple de réalisation d'un volet 210 pour un tel clapet. De préférence le volet 210 a un contour 212 complémentaire de la section droite du conduit 110, soit globalement un contour en forme de goutte d'eau, de sorte que le volet 210 obture complètement le conduit 110 lorsqu'il s'étend transversalement à l'axe du segment de conduit 110.

Le volet 210 peut cependant être réglé dans son orientation par rapport à l'axe du segment de conduit 110 qui le porte, par rotation autour d'un axe de rotation matérialisé par deux fourreaux ou tourillons coaxiaux 214, 216.

De tels clapets peuvent être implantés en tous lieux appropriés du conduit 110.

Selon un mode de réalisation préférentiel, applicable notamment aux cas d'utilisation d'un seul ventilateur par système 100, il peut ainsi être prévu un clapet équipé d'un volet 210 respectivement en partie supérieure horizontale et en partie inférieure horizontale du conduit 110.

Sur les figures 12 et 13 on a schématisé sous la référence 270 un axe de réglage de l'orientation des volets 210.

L'utilisation de clapets à volet d'obturation réglable 210 permet d'équilibrer la circulation du flux d'air entre l'avant et l'arrière du dispositif, c'est-à-dire entre les deux tronçons verticaux d'un même système 100. Ce réglage peut être assuré notamment lorsque l'engin porteur se déplace. Il permet par exemple d'éviter un jet arrière, en référence au sens de déplacement de l'engin, trop puissant et risquant de supprimer le traitement effectué en amont.

Selon une mise en œuvre particulière les volets 210 de clapet sont utilisés pour contrôler le flux d'air de sorte que le flux d'air sortant par la sortie 112 soit plus important sur le tronçon de cette sortie situé sur l'avant, en référence au sens de déplacement de l'engin, que sur le tronçon de cette sortie situé sur l'arrière. Cette disposition permet notamment d'éviter que le flux d'air arrière élimine le traitement précédemment déposé sur la végétation.

Le réglage des clapets/volets 210 peut être opéré en fonction de la densité de la végétation et la vitesse de déplacement de l'engin.

Le cas échéant les volets 210 peuvent être motorisés pour assurer une orientation automatique, par exemple sur la base de signaux issus de capteurs positionnés dans le conduit 110, tels que des capteurs de débit ou de pression judicieusement positionnés.

Sur les figures 12 et 13 ont a représenté sous la référence 220 quatre lieux préférentiels d'implantation de capteurs de pression au niveau des zones des segments incurvés 150 adjacents aux segments rectilignes 140, soit à proximité des angles du système.

Les volets 210 peuvent être orientés en fonction des signaux issus de capteurs de débit et/ou de pression, et suivant la vitesse de déplacement et de la pression des buses de pulvérisation 10, manuellement ou par une unité centrale adaptée.

La présente invention concerne également comme indiqué précédemment le procédé de pulvérisation de produit, notamment de produit phytosanitaire, à l'aide du système précédemment décrit.

Ce procédé comprend notamment les étapes qui consistent à pulvériser des jets 12 de produit sous pression en sortie des buses 10 reliées à tous moyens appropriés d'alimentation de produit, et à confiner ces jets 12 de produit à l'aide du rideau de confinement annulaire 102.

Les moyens d'alimentation en produit phytosanitaire pour fournir le produit aux buses 10 peuvent faire l'objet de nombreux modes de réalisation connus en soit et ne seront donc pas décrits dans le détail par la suite.

Dans le cadre de l'invention, on entend par « de l'ordre de » une valeur qui peut varier de plus ou moins 10% par rapport à la valeur indiquée.

Bien entendu la présente invention n'est pas limitée aux modes de réalisation qui viennent d'être décrits, mais s'étend à toutes variantes conformes aux revendications.

De préférence le conduit 110 est réglable en hauteur sur le châssis de l'engin C pour permettre une adaptation à la hauteur de la végétation V à traiter. Le conduit 110 est également réglable en largeur par ajout de segments rectilignes 140 entre les segments incurvés 150.

On a décrit précédemment une structure de conduit 110 formée par assemblage de différents tronçons ou segments 140, 150. En variante cependant le conduit 110 peut être formé d'un bloc unique.

D'une façon avantageuse, le conduit 110 peut être autoporté, et comportant un seul point de fixation grâce à l'utilisation d'un profilé laminé.

On aperçoit sur les figures 5, 6, 14 et 15 des voiles 230, 232 venus de matière sur la face extérieure de la paroi du conduit 110 à l'opposée de la sortie 112. Ces voiles 230, 232 sont parallèles et accolées. Ils s'étendent parallèlement à l'axe longitudinal du conduit 110. Ils servent de support au conduit 110. Pour cela les voiles 230, 232 peuvent être munis de perçages traversants destinés à recevoir tout moyens de fixation, tels que des moyens filetés.

Le conduit 110 peut concrètement être formé de deux coquilles complémentaires s'étendant sur une ouverture angulaire de l'ordre de 180°, d'une lèvre 130, 132 jusqu'à la base du voile 230, 232 respectivement associé. Les deux coquilles sont maintenues pour assurer la fermeture du conduit 110 par fixation des deux voiles 230, 232 entre eux.

On aperçoit par ailleurs sur les figures 14 et 15 des ailettes 240 formant raidisseur et renfort disposées sur l'arrière des éléments 140, 150 constituant le conduit 110. Ces ailettes 240 sont orientées perpendiculairement à l'axe longitudinal du conduit 110 et aux voiles 230, 232. Elles relient la surface extérieure du conduit 110 et une face des voiles 230, 232. Les ailettes 240 assurent une triangulation support des voiles 230, 230 et du conduit 110 et servent à rigidifier la structure du conduit 110.

Chaque conduit 110 comprend de préférence comme représenté sur les figures 12 et 13 un embout de vidange 250 situé en partie inférieure du conduit 110. L'embout de vidange 250 est configuré pour être ouvert sélectivement, par exemple par retrait d'un bouchon, puis refermé après accomplissement d'une opération de vidange. Afin de permettre une vidange rapide et efficace par l'intermédiaire de l'embout 250, le conduit 110 possède de préférence également un ajutage formant prise d'air 260 en partie supérieure du conduit 110, également susceptible d'être sélectivement ouvert puis refermé.

Le cas échéant la localisation des prises d'air 260 peut coïncider avec le point support des capteurs 220.

On a décrit précédemment en regard notamment de la figure 3, un engin comprenant deux systèmes du type précité en vis-à-vis formant enjambeur et permettant de traiter simultanément deux côtés opposés d'une cible végétale. Dans ce cas les flux d'air tubulaires 102, ainsi que les jets d'air 12, sont dirigés respectivement l'un vers l'autre, en direction du plan moyen vertical et longitudinal P de l'engin.

Cependant n'est pas limitée à ce mode de réalisation. Les engins conformes à la présente invention peuvent en effet comporter plus de deux systèmes en vis-à-vis.

On a ainsi représenté sur la figure 10 une vue en perspective d'une variante de réalisation d'un engin de pulvérisation conforme à la présente invention comprenant plus de deux systèmes en vis-à-vis formant enjambeur, en l'espèce deux paires de tels systèmes en vis-à-vis, soit quatre conduits 110 agencés sous forme de deux paires de conduits respectivement en vis-à-vis, pour traiter simultanément deux côtés opposés de deux rangs d'une cible végétale.

## Revendications

1. Système de pulvérisation de produit, notamment de produit phytosanitaire, comprenant des buses (10) de pulvérisation de produit et des moyens (110) générateurs de flux d'air comprenant un conduit (110) comprenant deux tronçons rectilignes parallèles, les buses (10) de pulvérisation étant placées et réparties linéairement au centre du conduit entre les deux tronçons rectilignes, les buses (10) de pulvérisation étant réparties de manière équidistante dans un plan longitudinal moyen (Pm) du conduit (110),
le système étant **caractérisé par le fait que** le conduit (110) comprend des extrémités de liaison (115, 117) globalement incurvées reliant lesdits deux tronçons rectilignes parallèles de sorte que le conduit a la forme d'un anneau oblong et possède une sortie (112) en forme de fente annulaire de contour oblong adaptée pour générer un flux d'air (102) sous forme d'un rideau d'air tubulaire continu de confinement latéralement à côté des jets (12) issus des buses de pulvérisation (10), enfermant les jets (12) issus des buses de pulvérisation (10), et infranchissable par le produit pulvérisé.

2. Système selon la revendication 1, **caractérisé en ce que** les moyens générateurs du flux d'air sont conformés de sorte que le flux d'air enfermant les jets (12) issus des buses de pulvérisation (10), n'interfère pas avec la propulsion de ce produit en sortie desdites buses (10).

3. Système selon l'une des revendications 1 ou 2, **caractérisé en ce que** moyens (110) de génération de flux d'air sont modulaires pour adapter la géométrie du rideau de confinement généré.

4. Système selon l'une des revendications 1 à 3, **caractérisé en ce que** la fente de sortie (112) des moyens de génération de flux d'air (110) est délimitée par des lèvres dissymétriques (130, 140), mettant en œuvre un effet Coanda.

5. Système selon l'une des revendications 1 à 4, **caractérisé en ce que** la fente de sortie (112) des moyens (110) de génération de flux d'air est délimitée par des lèvres (130, 140) faisant un angle entre leurs faces interne et externe de l'ordre de 15°.

6. Système selon l'une des revendications 1 à 5, **caractérisé en ce que** l'épaisseur de la fente de sortie (112) des moyens de génération de flux d'air (110) est comprise entre 1 et 6 mm, de préférence entre 1 et 4 mm.

7. Système selon l'une des revendications 1 à 6, **caractérisé en ce que** l'épaisseur de la fente de sortie (112) des moyens de génération de flux d'air (110) est réglable et ajustable.

8. Système selon l'une des revendications 1 à 7, **caractérisé en ce que** la section droite des moyens de génération de flux d'air (110) débouchant sur la fente de sortie (112) est en forme de goutte d'eau.

9. Système selon l'une des revendications 1 à 8, **caractérisé en ce que** la vitesse du flux d'air est déterminée pour créer un flux laminaire en sortie de la fente (112), qui se transforme en un flux turbulent sur la cible de végétaux (V).

10. Système selon l'une des revendications 1 à 9, **caractérisé en ce que** la vitesse du flux d'air en sortie de la fente (112) est comprise entre 20m/s et 100m/s.

11. Système selon l'une des revendications 1 à 10, **caractérisé en ce que** les buses (10) sont réglables en position, au moins en hauteur et de préférence selon trois axes x, y et z, et en orientation.

12. Système selon l'une des revendications 1 à 11, **caractérisé en ce que** les moyens générateurs de flux comprennent au moins un ventilateur (200) placé en partie supérieure, au-dessus d'un bâti support.

13. Système selon l'une des revendications 1 à 12, **caractérisé en ce que** qu'il comprend au moins un clapet comprenant un volet orientable (210) pour contrôler la répartition du flux d'air sur la sortie (112), et le cas échéant définir des débits d'air différents entre différentes zones de cette sortie (112).

14. Système selon l'une des revendications 1 à 13, **caractérisé en ce que** les moyens générateurs de flux comprennent des moyens de contrôle de débit, par exemple sous forme de clapet à volet orientable (210), de sorte que le flux d'air sortant par la sortie (112) soit plus important sur le tronçon de cette sortie situé sur l'avant, en référence au sens de déplacement de l'engin, que sur le tronçon de cette sortie situé sur l'arrière pour éviter que le flux d'air arrière élimine le traitement précédemment déposé sur la végétation.

15. Système selon l'une des revendications 1 à 14, **caractérisé en ce que** les moyens générateurs de flux d'air comprennent un conduit (110) muni de plusieurs points potentiels de raccordement avec une source de flux d'air sous pression (200), par exemple quatre points de raccordements (152) situés respectivement par paires en partie supérieure et en partie inférieure du conduit (110).

16. Engin porteur et automoteur comprenant au moins un système conforme à l'une des revendications 1 à 15.

17. Engin selon la revendication 16, **caractérisé en ce qu'**il comporte au moins deux systèmes conformes à l'une des revendications 1 à 16 en vis-à-vis, orientés de sortie que les jets (12) issus des buses de pulvérisation (10) et les rideaux d'air tubulaires continus de confinement générés par les deux systèmes soient dirigés respectivement l'un vers l'autre, permettant de traiter simultanément deux côtés opposés d'une cible végétale.

18. Procédé de pulvérisation de produit, notamment de produit phytosanitaire, comprenant les étapes consistant à pulvériser des jets de produit sous pression (12) en sortie de buses (10) reliées à des moyens d'alimentation de produit, et à générer un rideau (102) d'air infranchissable par le produit pulvérisé, à l'aide de moyens générateurs de flux d'air (110) comprenant un conduit (110) comprenant deux tronçons rectilignes parallèles, les buses (10) de pulvérisation étant placées et réparties linéairement au centre du conduit entre les deux tronçons rectilignes, les buses (10) de pulvérisation étant réparties de manière équidistante dans un plan longitudinal moyen (Pm) du conduit (110),
le procédé étant **caractérisé par le fait qu'**il comprend l'étape consistant à confiner entièrement le produit pulvérisé à l'aide d'un rideau d'air tubulaire continu généré par ledit conduit (110) qui comprend des extrémités de liaison (115, 117) globalement incurvées reliant lesdits deux tronçons rectilignes parallèles de sorte que le conduit a la forme d'un anneau oblong et possède une sortie (112) en forme de fente annulaire de contour oblong adaptée pour générer le flux d'air sous forme d'un rideau d'air tubulaire continu latéralement à côté des jets (12) issus des buses de pulvérisation (10) enfermant les jets issus des buses de pulvérisation.

19. Procédé selon la revendication 18, **caractérisé par le fait que** le flux d'air sortant par la sortie (112) est contrôlé pour être plus important sur le tronçon de cette sortie situé sur l'avant, en référence au sens de déplacement de l'engin, que sur le tronçon de cette sortie situé sur l'arrière pour éviter que le flux d'air arrière élimine le traitement précédemment déposé sur la végétation.

## Patentansprüche

1. System zum Versprühen eines Produkts, insbesondere eines Pflanzenschutzprodukts, umfassend Düsen (10) zum Versprühen eines Produkts und Erzeugungsmittel (110) einer Luftströmung, eine Leitung (110) umfassend, die zwei parallele geradlinige Abschnitte umfasst, wobei die Düsen (10) zum Versprühen in der Mitte der Leitung zwischen den beiden geradlinigen Abschnitten platziert und linear verteilt sind, wobei die Düsen (10) zum Versprühen abstandsgleich in einer Längsmittelebene (Pm) der Leitung (110) verteilt sind,
wobei das System **dadurch gekennzeichnet ist, dass** die Leitung (110) im Allgemeinen gebogene Anschlussenden (115, 117) umfasst, die die beiden parallelen geradlinigen Abschnitte derart verbinden, dass die Leitung die Form eines länglichen Rings aufweist, und einen Ausgang (112) in Form eines Ringspalts mit einer länglichen Kontur besitzt, der angepasst ist, um eine Luftströmung (102) in Form eines kontinuierlichen röhrenförmigen Luftvorhangs zum lateralen Einsperren neben den aus den Sprühdüsen (10) stammenden Strahlen (12), der die aus den Sprühdüsen (10) stammenden Strahlen (12) einschließt, und für das versprühte Produkt unpassierbar, zu erzeugen.

2. System nach Anspruch 1, **dadurch gekennzeichnet, dass** die Erzeugungsmittel der Luftströmung derart ausgeformt sind, dass die Luftströmung, die die aus den Sprühdüsen (10) stammenden Strahlen (12) einschließt, den Vortrieb dieses Produkts am Ausgang der Düsen (10) nicht behindert.

3. System nach einem der Ansprüche 1 oder 2, **dadurch gekennzeichnet, dass** die Mittel (110) zum Erzeugen einer Luftströmung modular sind, um die Geometrie des erzeugten Einsperrvorhangs anzupassen.

4. System nach einem der Ansprüche 1 bis 3, **dadurch gekennzeichnet, dass** der Ausgangsspalt (112) der Erzeugungsmittel einer Luftströmung (110) durch asymmetrische Lippen (130, 140) begrenzt ist, die einen Coanda-Effekt realisieren.

5. System nach einem der Ansprüche 1 bis 4, **dadurch gekennzeichnet, dass** der Ausgangsspalt (112) der Mittel (110) zum Erzeugen einer Luftströmung durch Lippen (130, 140) begrenzt ist, die einen Winkel zwischen ihren Innen-und Außenflächen in der Größenordnung von 15° bilden.

6. System nach einem der Ansprüche 1 bis 5, **dadurch gekennzeichnet, dass** die Dicke des Ausgangsspalts (112) der Erzeugungsmittel einer Luftströmung (110) zwischen 1 und 6 mm, vorzugsweise zwischen 1 und 4 mm liegt.

7. System nach einem der Ansprüche 1 bis 6, **dadurch gekennzeichnet, dass** die Dicke des Ausgangsspalts (112) der Erzeugungsmittel einer Luftströmung (110) einstellbar und anpassbar ist.

8. System nach einem der Ansprüche 1 bis 7, **dadurch gekennzeichnet, dass** die gerade Strecke der Erzeugungsmittel einer Luftströmung (110), die in den Ausgangsspalt (112) mündet, in Form eines Wassertropfens ist.

9. System nach einem der Ansprüche 1 bis 8, **dadurch gekennzeichnet, dass** die Geschwindigkeit der Luftströmung bestimmt wird, um eine Laminar-Strömung am Ausgang des Spalts (112) zu erzeugen, die sich in eine Wirbelströmung auf das Ziel von Pflanzen (V) verwandelt.

10. System nach einem der Ansprüche 1 bis 9, **dadurch gekennzeichnet, dass** die Geschwindigkeit der Luftströmung am Ausgang des Spalts (112) zwischen 20 m/s und 100 m/s liegt.

11. System nach einem der Ansprüche 1 bis 10, **dadurch gekennzeichnet, dass** die Düsen (10) positionsgemäß mindestens in der Höhe und vorzugsweise entlang dreier Achsen x, y und z und ausrichtungsgemäß einstellbar sind.

12. System nach einem der Ansprüche 1 bis 11, **dadurch gekennzeichnet, dass** die Strömungserzeugungsmittel mindestens einen Lüfter (200) umfassen, der im oberen Teil, oberhalb eines Trägergehäuses platziert ist.

13. System nach einem der Ansprüche 1 bis 12, **dadurch gekennzeichnet, dass** es mindestens eine Klappe umfasst, die einen ausrichtbaren Flügel (210) zur Kontrolle der Verteilung der Luftströmung auf den Ausgang (112), und gegebenenfalls zum Definieren der verschiedenen Luftvolumenströme zwischen den verschiedenen Zonen dieses Ausgangs (112) umfasst.

14. System nach einem der Ansprüche 1 bis 13, **dadurch gekennzeichnet, dass** die Strömungserzeugungsmittel Mittel zur Kontrolle eines Volumenstroms, beispielsweise in Form einer Klappe mit ausrichtbarem Flügel (210) umfassen, sodass die durch den Ausgang (112) austretende Luftströmung in dem Abschnitt dieses Ausgangs, der sich unter Bezugnahme auf die Fahrtrichtung der Maschine vorne befindet, größer ist, als in dem Abschnitt dieses Ausgangs, der sich hinten befindet, um zu vermeiden, dass die hintere Luftströmung die zuvor auf die Pflanzen abgeschiedene Behandlung eliminiert.

15. System nach einem der Ansprüche 1 bis 14, **dadurch gekennzeichnet, dass** die Erzeugungsmittel einer Luftströmung eine Leitung (110) umfassen, die mit mehreren möglichen Verbindungspunkten mit einer unter Druck stehenden Luftströmungsquelle (200), beispielsweise vier Verbindungspunkten (152), versehen ist, die sich jeweils paarweise im oberen Teil und im unteren Teil der Leitung (110) befinden.

16. Tragende und selbstfahrende Maschine, die mindestens ein System nach einem der Ansprüche 1 bis 15 umfasst.

17. Maschine nach Anspruch 16, **dadurch gekennzeichnet, dass** sie mindestens zwei Systeme nach einem der Ansprüche 1 bis 16, einander gegenüber, ausgangsausgerichtet beinhaltet, dass die aus den Sprühdüsen (10) stammenden Strahlen (12) und die kontinuierlichen röhrenförmigen Luftvorhänge zum Einsperren, die durch die beiden Systeme erzeugt werden, jeweils zueinander gerichtet sind, wodurch es möglich ist, gleichzeitig zwei gegenüberliegende Seiten eines pflanzlichen Ziels zu behandeln.

18. Verfahren zum Versprühen eines Produkts, insbesondere eines Pflanzenschutzprodukts, die Schritte umfassend, die darin bestehen, unter Druck stehende Produktstrahlen (12) am Ausgang von Düsen (10), die an Produktversorgungsmittel angeschlossen sind, zu versprühen, und einen für das versprühte Produkt unpassierbaren Luftvorhang (102) mithilfe von Erzeugungsmitteln einer Luftströmung (110) zu erzeugen, die eine Leitung (110) umfassen, die zwei parallele geradlinige Abschnitte umfasst, wobei die Düsen (10) zum Versprühen in der Mitte der Leitung zwischen den beiden geradlinigen Abschnitten platziert und linear verteilt sind, wobei die Düsen (10) zum Versprühen abstandsgleich in einer Längsmittelebene (Pm) der Leitung (110) verteilt sind,
wobei das Verfahren **dadurch gekennzeichnet ist, dass** es den Schritt umfasst, der darin besteht, das versprühte Produkt mithilfe eines kontinuierlichen röhrenförmigen Luftvorhangs, der durch die Leitung (110) erzeugt wird, vollständig einzusperren, die im Allgemeinen gebogene Anschlussenden (115, 117) umfasst, die die beiden parallelen geradlinigen Abschnitte derart verbinden, dass die Leitung die Form eines länglichen Rings aufweist, und einen Ausgang (112) in Form eines Ringspalts mit einer länglichen Kontur besitzt, der angepasst ist, um die Luftströmung in Form eines kontinuierlichen röhrenförmigen Luftvorhangs lateral neben den aus den Sprühdüsen (10) stammenden Strahlen (12), der die aus den Sprühdüsen stammenden Strahlen einschließt, zu erzeugen.

19. Verfahren nach Anspruch 18, **dadurch gekennzeichnet, dass** die durch den Ausgang (112) austretende Luftströmung kontrolliert wird, um in dem Abschnitt dieses Ausgangs, der sich, unter Bezugnahme auf die Fahrtrichtung der Maschine vorne befindet, größer zu sein, als in dem Abschnitt dieses Ausgangs, der sich hinten befindet, um zu vermeiden, dass die hintere Luftströmung die zuvor auf die Pflanzen abgeschiedene Behandlung eliminiert.

## Claims

1. System for spraying product, in particular plant-protection product, comprising product spray nozzles (10) and air flow generator means (110) comprising a conduit (110) comprising two parallel rectilinear segments, the spray nozzles (10) being placed and linearly distributed at the centre of the conduit between the two rectilinear segments, the spray nozzles (10) being distributed equidistantly in a median longitudinal plane (Pm) of the conduit (110),
the system being **characterised by** the fact that the conduit (110) comprises overall incurved linking ends (115, 117) connecting said two parallel rectilinear segments in such a way that the conduit has the form of an oblong ring and has an outlet (112) in the form of an annular slit with oblong contour adapted to generate an air flow (102) in the form of a continuous tubular curtain of air with lateral confinement on the jet side (12) originating from the spray nozzles (10), enclosing the jets (12) originating from the spray nozzles (10), impassable by the sprayed product.

2. System according to claim 1, **characterised in that** the air flow generator means are configured such that the air flow enclosing the jets (12) originating from the spray nozzles (10) does not interfere with the propulsion of this product at the outlet of said nozzles (10) .

3. System according to any one of claims 1 or 2, **characterised in that** air flow generation means (110) are modular to adapt the geometry of the generated confinement curtain.

4. System according to any one of claims 1 to 3, **characterised in that** the output slit (112) of the air flow generation means (110) is delimited by asymmetric lips (130, 140) implementing a Coanda effect.

5. System according to any one of claims 1 to 4, **characterised in that** the output slit (112) of the air flow generation means (110) is delimited by lips (130, 140) forming an angle between their internal and external faces of the order of 15°.

6. System according to any one of claims 1 to 5, **characterised in that** the thickness of the output slit (112) of the air flow generation means (110) is between 1 and 6 mm, preferably between 1 and 4 mm.

7. System according to any one of claims 1 to 6, **characterised in that** the thickness of the output slit (112) of the air flow generation means (110) is variable and adjustable.

8. System according to any one of claims 1 to 7, **characterised in that** the straight section of the air flow generation means (110) terminating on the output slit (112) is in the form of a water drop.

9. System according to any one of claims 1 to 8, **characterised in that** the speed of the air flow is determined to create a laminar flow at the outlet of the slit (112), which transforms into a turbulent flow on the target plants (V).

10. System according to any one of claims 1 to 9, **characterised in that** the speed of the air flow at the outlet of the slit (112) is between 20m/s and 100m/s.

11. System according to any one of claims 1 to 10, **characterised in that** the nozzles (10) are variable in position, at least in height and preferably according to three axes x, y and z, and in orientation.

12. System according to any one of claims 1 to 11, **characterised in that** the flow generator means comprise at least one fan (200) placed in the upper part, above a support frame.

13. System according to any one of claims 1 to 12, **characterised in that** it comprises at least one valve comprising an orientable flap (210) for controlling distribution of air flow on the outlet (112), and if needed defining different air flows between different zones of this outlet (112).

14. System according to any one of claims 1 to 13, **characterised in that** the flow generator means comprise flow control means, for example in the form of an orientable flap valve (210), such that the air flow exiting via the outlet (112) is greater on the section of this outlet located on the front, in reference to the direction of displacement of the device than on the section of this outlet located on the rear to avoid the rear air flow eliminating the treatment previously deposited on the vegetation.

15. System according to any one of claims 1 to 14, **characterised in that** the air flow generator means comprise a conduit (110) fitted with several potential attachment points with a pressurised source of air flow (200), for example four attachment points (152) located respectively in pairs in the upper part and in the lower part of the conduit (110).

16. Support and self-propelling device comprising at least one system according to any one of claims 1 to 15.

17. Device according to claim 16, **characterised in that** it includes at least two systems according to any one of claims 1 to 16 facing each other, outlet-oriented such that the jets (12) originating from the spray nozzles (10) and the continuous confinement tubular curtains of air generated by the two systems are directed respectively towards each other, making it possible to simultaneously treat two opposite sides of a target plant.

18. Process for spraying product, in particular plant-protection product, comprising the step consisting of spraying pressurised product jets (12) at the outlet of nozzles (10) connected to product supply means, and in generating a confinement curtain (102) of air impassable by the sprayed product, using air flow generator means (110) comprising a conduit (110) comprising two parallel rectilinear segments, the spray nozzles (10) being placed and linearly distributed at the centre of the conduit between the two rectilinear segments, the spray nozzles (10) being distributed equidistantly in a median longitudinal plane (Pm) of the conduit (110),
the process being **characterised by** the fact that it comprises the step consisting of entirely confining the sprayed product using a continuous tubular curtain of air generated by said conduit (110) that comprises overall incurved linking ends (115, 117) connecting said two parallel rectilinear segments in such a way that the conduit has the form of an oblong ring and has an outlet (112) in the form of an annular slit with oblong contour adapted to generate the air flow in the form of a continuous tubular curtain of air laterally on the jet side (12) originating from the spray nozzles (10) enclosing the jets originating from the spray nozzles.

19. Process according to claim 18, **characterised by** the fact that the air flow exiting via the outlet (112) is controlled to be greater on the section of this outlet located on the front, in reference to the direction of displacement of the device, than on the section of this outlet located on the rear to avoid the rear air flow eliminating the treatment previously deposited on the vegetation.
